# EUROPEAN PATENT APPLICATION

(11) **EP 4 800 224 A1**
(43) Date of publication of application: **02.09.2026**
(21) Application number: 26155534.6
(22) Date of filing: 30.01.2026
(51) Int. Cl.: F01D 25/28, F02C 7/32, F16B 21/12, F16B 21/16

(54) **SELF-LOCKING MECHANISM FOR REMOVABLE COMPONENTS**

(30) Priority: 24.02.2025 US 202519060973
(71) Applicant: Honeywell International Inc., Charlotte, NC 28202 (US)
(72) Inventor: ALSTAD, Shawn, Charlotte, 28202 (US)
(74) Representative: Ingrassia, Fisher & Lorenz UK Ltd.

(57) **Abstract**

A self-locking mechanism for a removable component includes a base structure, at least one detent ball, a lock ring, and a detent button. The base structure has a detent ball recess, which has a detent ball disposed therein. The lock ring surrounds the base structure and rotates, relative to the base structure, between a locked position and an unlocked position. The detent button extends through lock ring, surrounds the base structure, and has an outer surface that engages the lock ring and the inner surface that has axial ball grooves and a radial ball groove formed therein. The detent button selectively rotates with the lock ring and translates, relative to the lock ring, between at least a first position, in which the detent ball is partially disposed within the axial ball groove, and a second position, in which the detent ball is partially disposed within the radial ball groove.

## Description

### TECHNICAL FIELD

The present disclosure relates to a self-locking mechanism and, more particularly, to a self-locking mechanism for a removable component.

### BACKGROUND

Many systems, such as many gas turbine engines, include one or more removable components. For example, some gas turbine engines include one or more air cooled oil coolers (ACOCs) that need to be periodically removed, inspected and, if necessary, replaced. However, in many instances, the location of the ACOCs, as well as various other removable components, make accessing the removable components relatively difficult, which in turn makes it relatively difficult to both install and remove the components.

Hence, there is a need for a mechanism that can be used to readily, and relatively easily, lock removable components in place and to unlock the removable components to allow removal. This need is most pronounced for removable components that may be located in relatively difficult-to-access locations. However, the need exists for removable components in various locations. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a self-locking mechanism for a removable component includes a base structure, at least one detent ball, a lock ring, and a detent button. The base structure is configured to be fixedly coupled to the removable component and has at least one detent ball recess formed therein. The at least one detent ball is partially disposed within and extends radially outwardly from the at least one detent ball recess. The lock ring has a detent button opening formed therein. The lock ring surrounds at least a portion of the base structure and is configured to rotate, relative to the base structure and about a rotational axis, between a locked position and an unlocked position. The detent button extends through the detent button opening and surrounds at least a portion of the base structure. The detent button has an outer surface and an inner surface. The outer surface engages the lock ring, and the inner surface has at least one axial ball groove formed therein that extends parallel to the rotational axis and a radial ball groove formed therein that extends radially around the inner surface. The detent button is configured to selectively rotate with the lock ring about the rotational axis and further configured to translate, relative to the lock ring and in an axial direction along the rotational axis, between at least: (i) a first position, in which the at least one detent ball is partially disposed within the at least one axial ball groove, whereby the lock ring and detent button are prevented from rotating, and (ii) a second position, in which the at least one detent ball is partially disposed within the radial ball groove, whereby the lock ring and detent button are rotatable relative to the base structure and about the rotational axis.

In another embodiment, self-locking mechanism for a removable component a base structure, a plurality of detent balls, a lock ring, a detent button, and a spring. The base structure is configured to be fixedly coupled to the removable component and has a plurality of detent ball recesses formed therein. Each detent ball is partially disposed within and extends radially outwardly from a different one of the detent ball recesses. The lock ring has a detent button opening formed therein. The lock ring surrounds at least a portion of the base structure and is configured to rotate, relative to the base structure and about a rotational axis, between a locked position and an unlocked position. The detent button extends through the detent button opening and surrounds at least a portion of the base structure. The detent button has an outer surface and an inner surface. The outer surface engages the lock ring, and the inner surface has a plurality of axial ball grooves formed therein and a radial ball groove formed therein. Each axial ball groove extends parallel to the rotational axis, the radial ball groove extends radially around the inner surface. The detent button is configured to selectively rotate with the lock ring about the rotational axis and is further configured to translate, relative to the lock ring and in an axial direction along the rotational axis, between at least a first position and a second position. The spring engages the base structure and the detent button, and supplies a force to the detent button that urges the detent button toward the first position. In the first position, each detent ball is partially disposed within a different one of the axial ball grooves, whereby the lock ring and detent button are prevented from rotating, and in the second position, the detent balls are partially disposed within the radial ball groove, whereby the lock ring and detent button are rotatable relative to the base structure and about the rotational axis.

In yet another embodiment, an assembly for a removable component includes a housing, a component, and a self-locking mechanism. The housing has at least one locking slot formed therein, and the component is disposed within the housing and is configured to be selectively inserted into, and removed from, the housing. The self-locking mechanism is coupled to the component and includes a base structure, at least one detent ball, a lock ring, and a detent button. The base structure is fixedly coupled to the removable component and has at least one detent ball recess formed therein. The at least one detent ball is partially disposed within and extends radially outwardly from the at least one detent ball recess. The lock ring has a detent button opening formed therein. The lock ring surrounds at least a portion of the base structure and is configured to rotate, relative to the base structure and about a rotational axis, between a locked position and an unlocked position. The detent button extends through the detent button opening and surrounds at least a portion of the base structure. The detent button has an outer surface and an inner surface. The outer surface engages the lock ring, and the inner surface has at least one axial ball groove formed therein that extends parallel to the rotational axis and a radial ball groove formed therein that extends radially around the inner surface. The detent button is configured to selectively rotate with the lock ring about the rotational axis and further configured to translate, relative to the lock ring and in an axial direction along the rotational axis, between at least: (i) a first position, in which the at least one detent ball is partially disposed within the at least one axial ball groove, whereby the lock ring and detent button are prevented from rotating, and (ii) a second position, in which the at least one detent ball is partially disposed within the radial ball groove, whereby the lock ring and detent button are rotatable relative to the base structure and about the rotational axis.

Furthermore, other desirable features and characteristics of the self-locking mechanism will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts an exploded perspective view of one embodiment of a self-locking mechanism;
FIG. 2 depicts a cross-sectional perspective view of the self-locking mechanism of FIG. 1 in a first, locked position;
FIG. 3 depicts a cross-sectional perspective view of the self-locking mechanism of FIG. 1 in a second, unlocked position;
FIG. 4 depicts a cross-sectional perspective view of a portion of the self-locking mechanism of FIG. 1;
FIG. 5 depicts a perspective view of the self-locking mechanism of FIG. 1 coupled to a removable component;
FIG. 6 depicts a perspective view of the removable component installed in a housing and with self-locking mechanism in the locked position; and
FIG. 7 depicts a perspective view of the removable component installed in the housing and with self-locking mechanism in the unlocked position.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

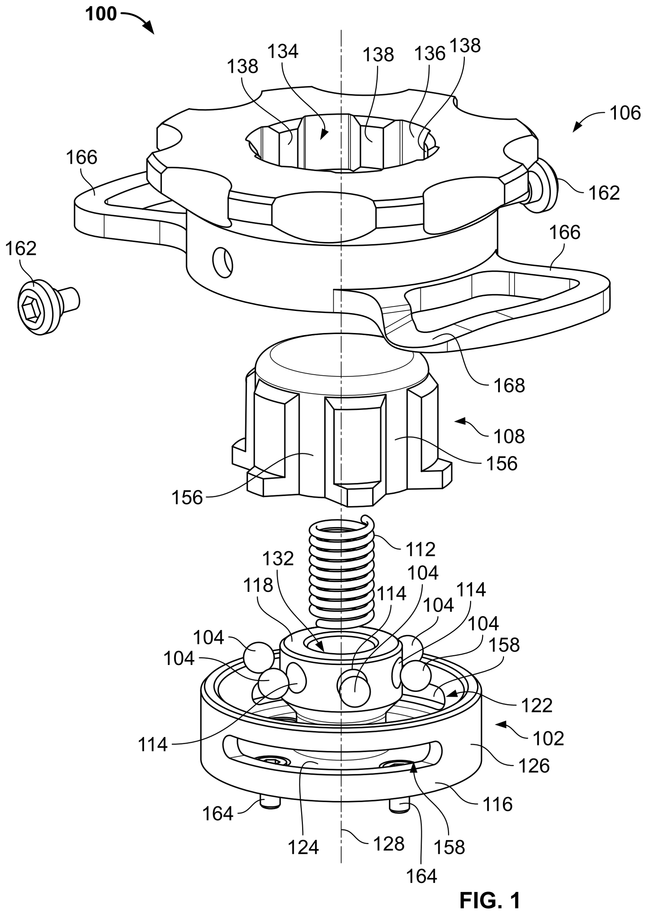

Referring to FIG. 1, an exploded plan view of one embodiment of a self-locking mechanism 100 for a removable component is depicted. The self-locking mechanism 100, at least in the depicted embodiment, includes a base structure 102, at least one (i.e., one or more) detent ball 104, a lock ring 106, a detent button 108, and a spring 112. The base structure 102 is configured to be fixedly coupled to the removable component (not illustrated in FIG. 1) and has at least one (i.e., one or more) detent ball recess 114 formed therein. As is readily seen in FIG. 1, the depicted base structure 102 includes a plurality of detent ball recesses 114. More specifically, the depicted base structure 102 includes six detent ball recesses 114, not all of which are visible in FIG. 1. It will be appreciated, however, that the base structure 102 could be implemented with more or less than this number of detent ball recesses.

Although the base structure 102 could be variously configured and implemented, in the depicted embodiment it includes a base 116 and a detent ball support post 118. The base 116 has a cavity 122 formed therein that defines a bottom portion 124 and a radial sidewall portion 126. As is readily seen, the radial sidewall portion 126 is symmetrically disposed about a rotational axis 128.

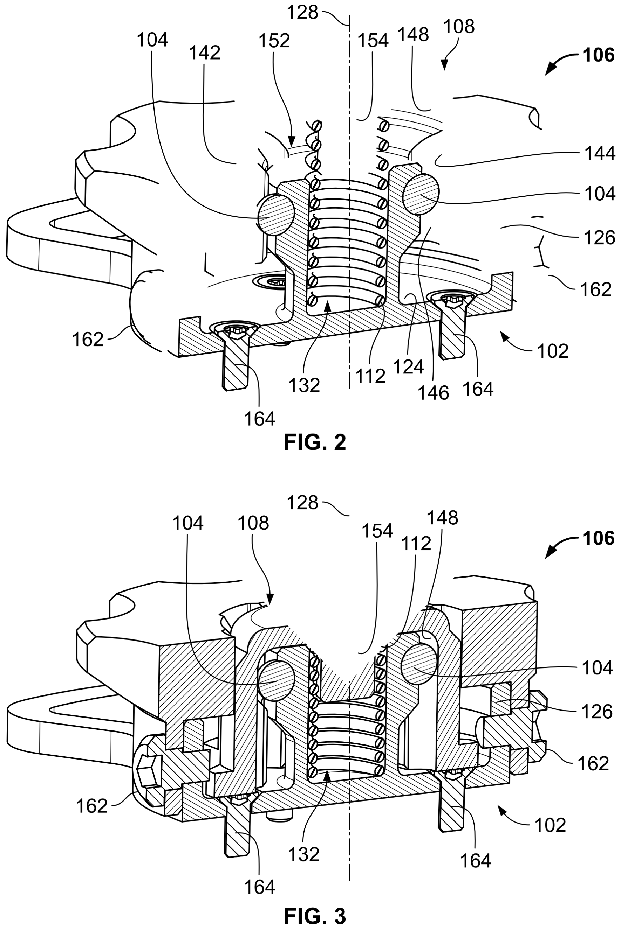

The detent ball support post 118 extends axially from the bottom portion 124 along the rotational axis 128 and is the portion of the base structure 102 that has the at least one detent ball recess 114 formed therein. The detent ball support post also has an internal bore 132 formed therein that is symmetric about the rotational axis 128. As is readily seen in FIGS. 2 and 3, the internal bore 132 has the spring 112 at least partially disposed therein.

The one or more detent balls 104 are partially disposed within, and extend radially outwardly from, the one or more detent ball recesses 114. As may be appreciated, the specific number of detent balls 104 may vary. Preferably, however, the number of detent balls 104 matches the number of detent ball recesses 114. Thus, in the depicted embodiment, the self-locking mechanism 100 includes six detent balls 104, not all of which are visible in FIG. 1.

No matter the specific numbers of detent balls 104 and detent ball recesses 114, it is seen that the lock ring 106 has a detent button opening 134 formed therein. The detent button opening 134 is defined by a lock ring inner surface 136, which has a plurality of lock ring protrusions 138 that extend radially inwardly. The purpose of the lock ring protrusions 138 is described further below. When the self-locking mechanism 100 is assembled, as shown in FIG. 2, the lock ring 106 surrounds at least a portion of the base structure 102. The lock ring 106 is additionally configured to rotate, relative to the base structure 102 and about the rotational axis 128, between two main positions. As will also be described further below, these two main positions are a locked position and an unlocked position.

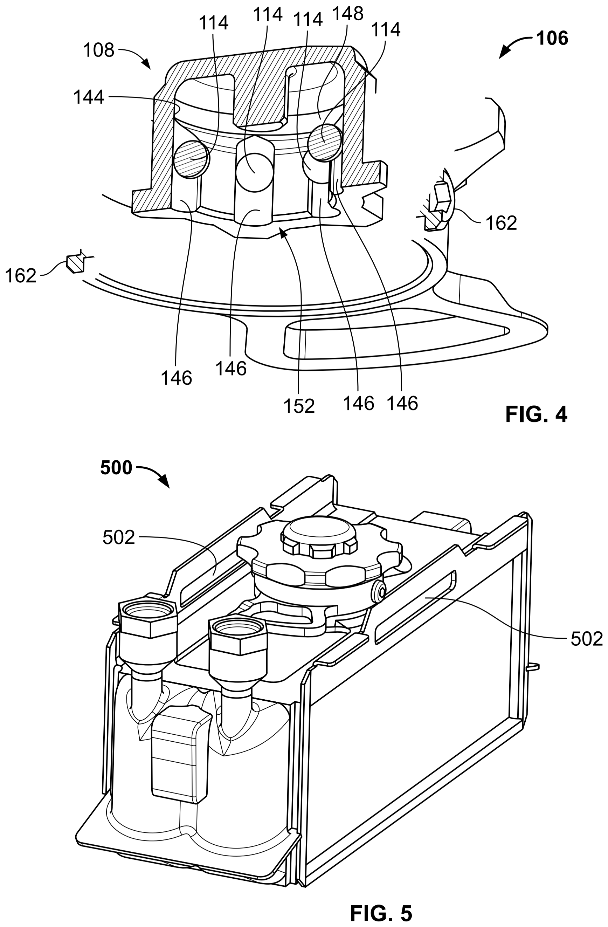

With continued reference to FIG. 2, it is seen that the detent button 108 has an outer surface 142 and an inner surface 144, and that the detent button 108 extends through the detent button opening 134 in the lock ring 106 and surrounds at least a portion of the base structure 102. The outer surface 142 of the detent button 108 engages the lock ring 106, and the inner surface 144 of the detent button 108 has at least one (i.e., one or more) axial ball groove 146 formed therein and a radial ball groove 148 formed therein. As shown more clearly in FIG. 4, the one or more axial ball grooves 146 extend parallel to the rotational axis 128, and the radial ball groove 148 extends radially around the inner surface 144.

The inner surface 144 of the detent button 108 additionally defines a detent button cavity 152, and it is seen that the detent ball support post 118 extends into the detent button cavity 152. The detent button 108 additionally includes a protrusion 154 that extends into the detent button cavity 152 and toward the internal bore 132 of the detent ball support post 118. As is also readily seen, a portion of the spring 112 surrounds and engages the protrusion 154.

The detent button 108 is configured to selectively rotate with the lock ring 106 about the rotational axis 128 and is further configured to translate, relative to the lock ring 106 and in an axial direction along the rotational axis 128, between at least a first position and a second position. In the first position, which is the position depicted in FIG. 2, the detent balls 104 are partially disposed within the axial ball grooves 146. As such, the lock ring 106 and detent button 108 are prevented from rotating. In the second position, which is the position depicted in FIG. 3, the detent balls 104 are partially disposed within the radial ball groove 148. Thus, the lock ring 106 and detent button 108 are rotatable relative to the base structure 102 and about the rotational axis 128. To facilitate this, it is seen that the detent button outer surface 142 includes a plurality of grooves 156, and that each groove 156 has a different one of the lock ring protrusions 138 disposed therein.

As is readily apparent, the spring 112, which engages the base structure 102 and the detent button 108, supplies a spring force to the detent button 108 that urges the detent button 108 toward the first position. Thus, an input force sufficient to overcome the spring force supplied by the spring 112 must be applied to the detent button 108 in order to move the detent button 108 to the second position. As FIG. 3 depicts, when the detent button 108 is in the second position, the detent button protrusion 154 is at least partially disposed within the internal bore 132 of the detent ball support post 118, thereby compressing the spring 112. Thereafter, upon removal of the input force, the spring 112 will return the detent button 108 to the first position.

The self-locking mechanism 100, at least in the depicted embodiment, also includes rotation limiting features to limit the angular rotation of the lock ring 106 and detent button 108. Although the specific configuration of the rotation limiting features may vary, in the depicted embodiment these features include one or more rotation limiting slots 158 and one or more rotation limiting posts 162. The depicted self-locking mechanism 100 includes two rotation limiting slots 158 and two rotation limiting posts 162. It will be appreciated, however, that the self-locking mechanism 100 could be implemented with more or less than this number of rotation limiting slots 158 and rotation limiting posts 162.

No matter the specific numbers, the rotation limiting slots 158 are formed in the base structure 102, and the rotation limiting posts 162 are coupled to, and extend radially inwardly from, the lock ring 106. Each of the rotation limiting posts 162, which may be implemented using suitable threaded or interference fit fasteners, also extend at least partially into a different one of the rotation limiting slots 158. The specific angular value that the lock ring 106 (and detent button 108) is limited to rotate may vary and may depend, for example, on the dimensions of the rotation limiting slots 158. In the depicted embodiment, the rotation limiting slots 158 are dimensioned to limit rotation of rotation of the lock ring 106 (and detent button 108) to 90-degrees.

The self-locking mechanism 100 may be used with various types of removable components to allow the removable components, when installed, to be locked on place and then to be subsequently unlocked and removed for maintenance, inspection, etc. In one particular instantiation, the self-locking mechanism 100 is used to selectively lock and unlock a removable component on a gas turbine engine. One such component, an embodiment of which is depicted in FIG. 5, is an air-cooled oil cooler 500. As depicted, the self-locking mechanism 100 is coupled to the air-cooled oil cooler 500. More specifically, the base structure 102 is fixedly coupled to the air-cooled oil cooler 500 using, for example, suitable fastener hardware 164 (see FIGS. 1-3).

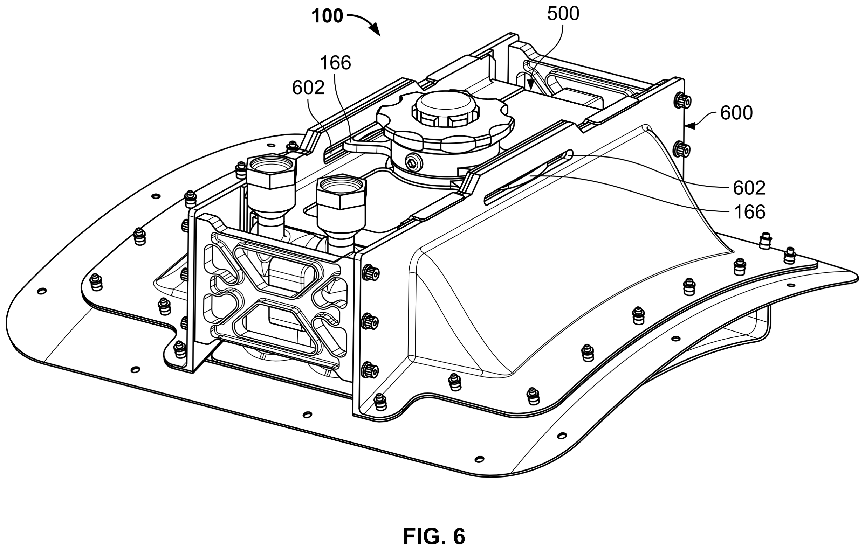

Turning now to FIG. 6, it is seen that the air-cooled oil cooler 500 is disposed within a housing assembly 600. It is also seen that the housing assembly 600 has at least one (i.e., one or more) locking slot 602. Similarly, at least in the depicted embodiment, the air-cooled oil cooler 500 has at least one matching locking slot 502 (see FIG. 5). For components and housing assemblies that are configured with these locking slots, the self-locking mechanism 100 includes at least one (i.e., one or more) additional feature that is selectively disposed within the locking slots 502, 602. With reference back to FIG. 1, this additional feature will now be briefly described.

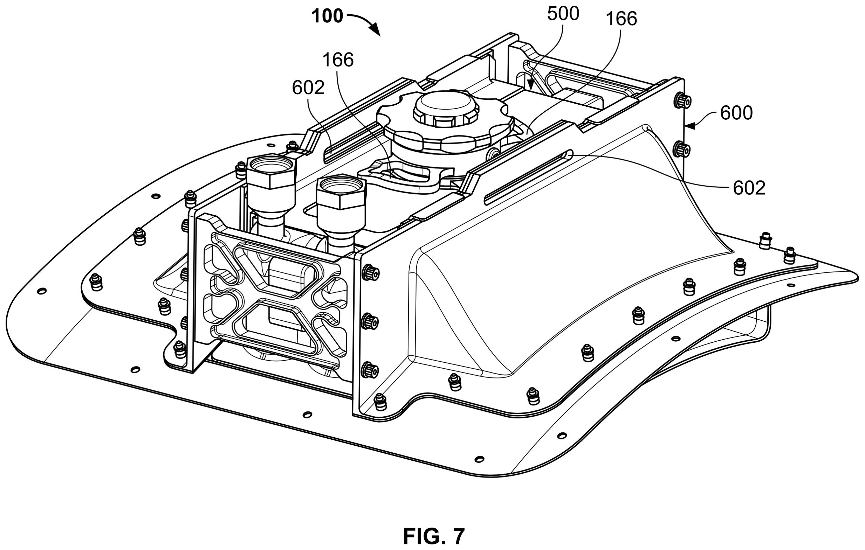

For components and housing assemblies configured as depicted in FIGS. 5-7, the lock ring 106 additionally includes at least one lock arm 166. In the depicted embodiment, the lock ring includes two lock arms 166, and each lock arm extends radially outwardly from the lock ring 106. As FIG. 1 also depicts, each lock arm has in inclined surface 168 formed on a portion thereof (only on visible in FIG. 1). As may be appreciated, the inclined surfaces 168 help facilitate rotation of the lock arms 166 into and out of the locking slots 502, 602 when the lock ring 106 is being rotated in into the locked and unlocked positions, respectively. Although the depicted lock ring 106 includes two lock arms, it will be appreciated that in other embodiments the lock ring 106 could include more or less than this number of lock arms 166.

The self-locking mechanism 100 disclosed herein may be used to readily, and relatively easily, lock removable components in place and to unlock the removable components to allow removal. The self-locking mechanism 100 is especially useful with removable components that may be located in relatively difficult-to-access locations.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A self-locking mechanism for a removable component, comprising:
a base structure configured to be fixedly coupled to the removable component and having at least one detent ball recess formed therein;
at least one detent ball partially disposed within and extending radially outwardly from the at least one detent ball recess;
a lock ring having a detent button opening formed therein, the lock ring surrounding at least a portion of the base structure and configured to rotate, relative to the base structure and about a rotational axis, between a locked position and an unlocked position; and
a detent button extending through the detent button opening and surrounding at least a portion of the base structure, the detent button having an outer surface and an inner surface, the outer surface engaging the lock ring, the inner surface having at least one axial ball groove formed therein that extends parallel to the rotational axis and a radial ball groove formed therein that extends radially around the inner surface, the detent button configured to selectively rotate with the lock ring about the rotational axis and further configured to translate, relative to the lock ring and in an axial direction along the rotational axis, between at least:
(i) a first position, in which the at least one detent ball is partially disposed within the at least one axial ball groove, whereby the lock ring and detent button are prevented from rotating, and
(ii) a second position, in which the at least one detent ball is partially disposed within the radial ball groove, whereby the lock ring and detent button are rotatable relative to the base structure and about the rotational axis.

2. The self-locking mechanism of claim 1, further comprising:
a spring engaging the base structure and the detent button, the spring supplying a force to the detent button that urges the detent button toward the first position.

3. The self-locking mechanism of claim 2, wherein the base structure comprises:
a base having a cavity formed therein that defines (i) a bottom portion and (ii) a radial sidewall portion that is symmetrically disposed about the rotational axis; and
a detent ball support post extending axially from the bottom portion along the rotational axis and having an internal bore formed therein that is symmetric about the rotational axis, the detent ball support post having the at least one detent ball recess formed therein, the internal bore having the spring at least partially disposed therein.

4. The self-locking mechanism of claim 3, wherein:
the inner surface of the detent button defines detent button cavity into which the detent ball support post extends;
the detent button further includes a protrusion that extends into the detent button cavity and toward the internal bore of the detent ball support post;
a portion of the spring surrounds and engages the protrusion; and
the protrusion is at least partially disposed within the internal bore of the detent ball support post when the detent button is in the second position.

5. The self-locking mechanism of claim 1, further comprising:
at least one rotation limiting slot formed in the base structure; and
at least one rotation limiting post coupled to and extending radially inwardly from the lock ring, the at least one rotation limiting post extending at least partially into the rotation limiting slot.

6. The self-locking mechanism of claim 1, wherein:
the lock ring has a lock ring inner surface that defines the detent button opening;
the lock ring inner surface includes a plurality of lock ring protrusions that extend radially inwardly; and
the detent button outer surface has a plurality of grooves, each groove having one of the lock ring protrusions disposed therein.

7. The self-locking mechanism of claim 1, further comprising:
at least one lock arm extending radially outwardly from the lock ring, the at least one lock arm having an inclined surface formed on a portion thereof.
